# EUROPEAN PATENT SPECIFICATION

(11) **EP 2 479 013 B1**
(45) Date of publication and mention of the grant of the patent: **19.03.2014**
(21) Application number: 12380002.1
(22) Date of filing: 18.01.2012
(51) Int. Cl.: B29B 11/14, B29K 105/00, B29B 11/08, B29C 49/06

(54) **Preform for forming containers with light barrier effect by stretch blow molding**
Vorformling zum Formen von Behältern mit Lichtbarriereeffekt durch Streckblasformen
Préforme pour former des récipients avec un effet barrière contre la lumière par moulage par étirage-soufflage

(30) Priority: 19.01.2011 ES 201100048
(43) Date of publication of application: 25.07.2012
(73) Proprietor: Linear Overmoulding Applications, SL, 08032 Barcelona (ES)
(72) Inventor: Atance Orden, Angel, 08032 Barcelona (ES); Viron, Alain, 45390 Desmont (FR)
(74) Representative: Torner Lasalle, Elisabet

(56) References cited:
- EP-A1- 2 159 031
- EP-A2- 1 008 528
- GB-A- 2 086 342
- JP-A- 2000 264 325
- US-A- 4 094 407
- US-A1- 2002 110 654

## Description

The present invention relates to a preform for forming containers protected from light obtained by a two-step injection stretch blow molding (ISBM) process, wherein the preforms are first obtained by injection molding using a polymer material selected from high density polyethylene (HDPE or PEHD) or polypropylene (PP) with at least one highly reflective additive and the containers are subsequently obtained by means of a step of heating and stretch blow molding the preforms.

### Background of the Invention

It is well known a method for obtaining containers from a polymer material by two-step injection stretch blow molding (ISBM), including first producing preforms from a polymer material by injection molding and subsequently heating and stretch blow molding the preforms. Documents US 3944643, JP 11348184, US 2009130359, US 2010243498, and WO 2010060692 relate to obtaining containers by two-step injection stretch blow molding (ISBM) using polyethylene terephthalate (PET) as the polymer material for forming the preforms. Today, the use of high density polyethylene (PEHD) and polypropylene (PP) (see, for example, documents US 2005249904 and JP 60125627) for obtaining containers by means of two-step injection stretch blow molding (ISBM) processes is also attempted.

Producing single layer preforms by an injection molding method, double layer preforms by an injection overmolding method, and even preforms with more than two layers by a co-injection method are known. Producing preforms with one or more layers for obtaining containers with a light barrier effect, useful, for example, for marketing dairy products, where the polymer material used for the single layer or the outer layer of the preform includes a highly reflective colorant, such as titanium oxide (TiO₂) or a calcium-based colorant, among others, in a proportion sufficient for creating a light barrier by reflection, is also known.

The preforms are usually heated by exposing the preforms to the infrared radiation of heating lamps, and the subsequent stretch blow molding of the heated preforms is performed by injecting pressurized air into the preform within a blow mold.

Nearest prior art document EP 2159031 A1 discloses a two-layered preform obtained by injection molding which is provided with an inner layer made of a plastic material capable of providing a barrier effect against light by absorption and an outer layer made of a plastic material capable of providing a barrier effect against light by reflection, said two-layered preform being applicable, for example to the formation of bottles for milk. The plastic base material of the outer layer of the two-layered preform is polyethylene terephthalate (PET) or polypropylene (PP) with from 3% to 10% by weight of active ingredients of titanium oxide (TiO₂). However, the relatively high proportion of the highly reflective colorant, such as titanium oxide (TiO₂), in the outer layer has the drawback of limiting or preventing an even and complete heating of the preform when it is heated by inferred radiation prior to stretch blow molding. EP 2159031 A1 does not mention the provision of any amount of an infrared absorbing colorant, such as carbon black or activated carbon, added to the plastic material of the outer layer.

The blow stretching of the preforms is performed without any problems when the preforms are made of polyethylene terephthalate (PET) including highly reflective additives or colorants (TiO₂, calcium or others) in the single layer or in the outer layer of the preform.

For example, as a highly reflective colorant in preforms made of PET titanium oxide (TiO₂) is successfully used, which renders white color to the polymer material and has the advantage of reflecting the light waves of the infrared and visible spectrum, thus providing a light barrier effect in single layer, double layer or multilayer bottles for dairy products.

The results in the step of heating and stretch blow molding using preforms made of transparent PP or PEHD (without colorant additives) are also good and well known.

However, in the two-step production (ISBM) of containers from preforms made of PEHD or PP including a mineral or vegetal colorant in a proportion sufficient for providing a highly reflective color, and especially white color, problems occur in the step of heating and stretch blow molding due to the fact that the high reflection capacity of the colorant complicates or prevents the material of the preform from absorbing the infrared radiation and from being heated until acquiring a plastic consistency suitable for stretching.

For example, when a percentage of TiO₂ in a proportion of 1% by weight or more is incorporated to the PEHD or PP, the light reflection property of the TiO₂ also affects its capacity for absorbing the infrared rays from the heating lamps, and due to the proportion of reflected radiation, the material of the preform is not adequately and uniformly heated therefore a correct bi-orientation, in other words a constant and balanced stretching of the material of the preform both in length and in diameter, is not achieved during the stretch blow molding. According to the blow tests conducted on 15 September 2010 with single layer and double layer preforms made of PEHD, a percentage of 1% by weight of TiO₂ does not allow blow stretching the bottles in an industrial manner.

To obtain a bottle offering a light barrier with a protection from a minimum wavelength level of 550 nm, required for preventing the degradation of riboflavin contained in milk subjected to an extended shelf life (ESL) processing or to an ultra-high temperature (UHT) treatment, a percentage of TiO₂ of 2% to 8% needs to be used, and at these percentages the preform made of PEHD or PP present the problem described above during the step of heating and stretch blow molding.

A highly light absorbing colorant, such as for example carbon black, added to the PEHD or PP does not affect the heating and stretch blow molding process when the colorant is in the concentrations of 0.0001% to 5%. In contrast, the highly absorbing colorant favors the absorption and the homogenization of the heat transmitted by the infrared lamps in the heating phase and allows stretch blow molding the preforms made of PEHD or PP with a percentage of a highly light absorbing colorant, such as carbon black without problems.

### Description of the Invention

The present invention aims to overcome the previous and other drawbacks by providing a preform for forming containers with light barrier effect by stretch blow molding of said preform, which comprises a single layer or an outer layer made of a polymer material with a highly reflective colorant, such as titanium oxide TiO₂, in a proportion equal to or greater than 2% by weight for providing a light barrier effect by reflection to a container obtained by stretch blow molding of said preform. The preform of the present invention is **characterized in that** the mentioned polymer material of the single layer or outer layer is selected from high density polyethylene (PEHD) and polypropylene (PP), in that the mentioned proportion of the highly reflective colorant, such as titanium oxide TiO₂, in the polymer material of the single layer or outer layer is from 2% to 8% by weight, and in that the polymer material of the single layer or outer layer further comprises a colorant with infrared ray absorbing capacity in a proportion of 0.0005% to 3% by weight.

Therefore, the relatively small proportion of the colorant with infrared ray absorbing capacity in the material of the preform is sufficient for assuring that the infrared rays from the heating lamp, which in principle are reflected by the highly reflective colorant, such as titanium oxide (TiO₂), are absorbed in a proportion sufficient for allowing the material of the preform to be correctly and uniformly heated for achieving a correct bi-orientation, in other words a constant and balanced stretching of the material of the preform both in length and in diameter, during stretch blow molding. Furthermore, the proportion of the colorant with infrared ray absorbing capacity in the material of the preform is small enough in comparison with the proportion of titanium oxide (TiO₂) so as to not alter its white color which can be readily seen with the naked eye.

In a preferred embodiment, the polymer material of the single layer or outer layer of the preform is high density polyethylene (PEHD) with a density (without additives) of 0.94 g/cm³ to 0.97 g/cm³, preferably 0.95 g/cm³, and the colorant with infrared ray absorbing capacity is carbon black in a proportion of 0.0005% to 0.01%. Nevertheless, in alternative embodiments the colorant with infrared ray absorbing capacity can be any other colorant with infrared absorbing power, for example grey colorant, amber or brown colorant, blue colorant, etc., or even another additive of those used for increasing the heating speed (re-heat additives).

If the preform comprises a single layer, it can be obtained by a conventional injection molding process.

Optionally, the preform can be a double layer preform and can comprise, in addition to the mentioned outer layer, an inner layer made of a polymer material with a colorant with light absorbing capacity for providing a light barrier effect by absorption to the container obtained by stretch blow molding of the preform. The polymer material of this inner layer is generally selected from high density polyethylene (PEHD) and polypropylene (PP), and it is preferably the same polymer material as that of which the outer layer is made. The colorant with infrared ray absorbing capacity can be, among others, carbon black, grey colorant, amber or brown colorant, blue colorant, etc., and is present in the polymer material of the inner layer in a proportion of 0.1 % to 4% by weight.

The double layer preform made up of an outer layer and an inner layer can be obtained by injection overmolding. The polymer material of the inner layer of the preform further comprises preferably a highly reflective colorant, preferably the same colorant which is included in the outer layer, for example titanium oxide TiO₂, in a proportion of 2% to 8% by weight.

In another alternative embodiment, the preform is a triple layer preform and comprises, in addition to the mentioned outer layer, an inner layer made of the same polymer material and with the same additives as the outer layer, and an intermediate layer located between the outer and inner layers. This intermediate layer is made of a polymer material with a colorant with light absorbing capacity for providing a light barrier effect by absorption to the container obtained by the stretch blow molding process of the preform.

The polymer material of the intermediate layer is generally high density polyethylene (PEHD) or polypropylene (PP), and is preferably the same polymer material as those of which the outer and inner layers are made. The colorant with light absorbing capacity can be, among others, carbon black, grey colorant, amber or brown colorant, blue colorant, etc., and is present in the polymer material of the intermediate layer in a proportion of 0.1 % to 8% by weight.

The triple layer preform made up of an outer layer, an intermediate layer and an inner layer can be obtained by co-injection. The polymer material of the intermediate layer of the preform further comprises preferably a highly reflective colorant, preferably the same colorant which is included in the outer and inner layers, for example titanium oxide TiO₂, in a proportion of 2% to 8% by weight.

Good results have been obtained with preforms made of high density polyethylene (PEHD) with a density (without additives) of 0.95 g/cm³, titanium oxide (TiO₂) as the highly reflective colorant in a proportion of 2% to 8% by weight, and carbon black as the colorant with infrared ray absorbing capacity in a proportion of a 0.0005% to 0.1 % by weight, using blowing air pressure between 10 and 20 bars and preform temperature upon exiting the heating oven of 100°C to 130°C.

Modifications, variations and combinations will be obvious to a person skilled in the art from the embodiments described without departing from the scope of the present invention as it is defined in the attached claims.

## Claims

1. A preform for forming containers with light barrier effect by stretch blow molding, comprising a single layer or an outer layer made of a polymer material with a proportion of titanium oxide TiO₂ equal to or greater than 2% by weight for providing a light barrier effect by reflection to a container obtained by stretch blow molding of said preform, **characterized in that**:
said polymer material of said single layer or outer layer is selected from high density polyethylene (PEHD) and polypropylene (PP);
the mentioned proportion of titanium oxide TiO₂ in the polymer material of the single layer or outer layer is from 2% to 8% by weight; and
the polymer material of the single layer or outer layer further comprises a colorant with infrared ray absorbing capacity in a proportion of 0.0005% to 3% by weight.

2. The preform according to claim 1, **characterized in that** the polymer material of the single layer or outer layer is high density polyethylene (PEHD) with a density (without additives) of 0.94 g/cm³ to 0.97 g/cm³.

3. The preform according to claim 1 or 2, **characterized in that** said colorant with infrared ray absorbing capacity of the single layer or outer layer is carbon black in a proportion of 0.0005% to 0.1% by weight.

4. The preform according to claim 1, 2 or 3, **characterized in that** it comprises an inner layer made of a polymer material with a colorant with light absorbing capacity for providing a light barrier effect by absorption to said container obtained by said stretch blow molding process of the preform.

5. The preform according to claim 4, **characterized in that** said polymer material of said inner layer is selected from high density polyethylene (PEHD) and polypropylene (PP).

6. The preform according to claim 5, **characterized in that** said colorant with light absorbing capacity is present in the polymer material of the inner layer in a proportion of 0.1 % to 2% by weight.

7. The preform according to claim 6, **characterized in that** the colorant with absorption capacity of the polymer material of the inner layer is carbon black.

8. The preform according to any one of claims 4 to 7, **characterized in that** the polymer material of the inner layer further comprises titanium oxide TiO₂ in a proportion of 2% to 8% by weight.

9. The preform according to claim 1, 2 or 3, **characterized in that** it comprises an inner layer made of the same polymer material and with the same additives as the outer layer, and an intermediate layer made of a polymer material with a colorant with light absorbing capacity for providing a light barrier effect by absorption to said container obtained by said stretch blow molding process of the preform.

10. The preform according to claim 9, **characterized in that** said polymer material of said intermediate layer is selected from high density polyethylene (PEHD) and polypropylene (PP).

11. The preform according to claim 10, **characterized in that** said colorant with light absorbing capacity is present in the polymer material of the intermediate layer in a proportion of 0.1 % to 8% by weight.

12. The preform according to claim 11, **characterized in that** said colorant with light absorbing capacity of the polymer material of the intermediate layer is carbon black.

13. The preform according to any one of claims 9 to 12, **characterized in that** the polymer material of the intermediate layer further comprises titanium oxide (TiO₂) in a proportion of 2% to 8% by weight.

## Patentansprüche

1. Vorformling zum Formen von Behältern mit Lichtbarriereeffekt durch Streckblasformen, umfassend eine Einzelschicht oder eine äußere Schicht aus einem polymeren Material mit einem Anteil an Titanoxid TiO₂ gleich oder größer als 2 Gew.-% um für einen Behälter, welcher durch Streckblasformen des genannten Vorformlings erhalten wird, einen Lichtbarriereeffekt durch Rückstrahlung bereitzustellen, **dadurch gekennzeichnet, dass**:
das genannte polymere Material der genannten Einzelschicht oder äußeren Schicht aus Polyethylen hoher Dichte (PEHD) und Polypropylen (PP) gewählt wird;
der genannte Anteil an Titanoxid TiO₂ im polymeren Material der Einzelschicht oder äußeren Schicht 2 Gew.-% bis 8 Gew.-% beträgt; und
das polymere Material der Einzelschicht oder äußeren Schicht zusätzlich einen Farbstoff mit Absorptionsvermögen für Infrarotstrahlen in einem Anteil von 0,0005 Gew.-% bis 3 Gew.-% umfasst.

2. Vorformling nach Anspruch 1, **dadurch gekennzeichnet, dass** das polymere Material der Einzelschicht oder äußeren Schicht Polyethylen hoher Dichte (PEHD) mit einer Dichte (ohne Zusatzstoffen) von 0,94 g/cm³ bis 0,97 g/cm³ ist.

3. Vorformling nach Anspruch 1 oder 2, **dadurch gekennzeichnet, dass** der genannte Farbstoff mit Absorptionsvermögen für Infrarotstrahlen der Einzelschicht oder äußeren Schicht Ruß in einem Anteil von 0,0005 Gew.-% bis 0,1 Gew.-% ist.

4. Vorformling nach Anspruch 1, 2 oder 3, **dadurch gekennzeichnet, dass** es eine innere Schicht aus einem polymeren Material mit einem Farbstoff mit Lichtabsorptionsvermögen umfasst, um für den genannten Behälter, welcher durch den genannten Streckblasformenprozess des Vorformlings erhalten wird, einen Lichtbarriereeffekt durch Absorption bereitzustellen.

5. Vorformling nach Anspruch 4, **dadurch gekennzeichnet, dass** das genannte polymere Material der genannten inneren Schicht aus Polyethylen hoher Dichte (PEHD) und Polypropylen (PP) gewählt wird.

6. Vorformling nach Anspruch 5, **dadurch gekennzeichnet, dass** der genannte Farbstoff mit Lichtabsorptionsvermögen im polymeren Material der inneren Schicht in einem Anteil von 0,1 Gew.-% bis 2 Gew.-% vorliegt.

7. Vorformling nach Anspruch 6, **dadurch gekennzeichnet, dass** der Farbstoff mit Absorptionsvermögen des polymeren Materials der inneren Schicht Ruß ist.

8. Vorformling nach einem der Ansprüche 4 bis 7, **dadurch gekennzeichnet, dass** das polymere Material der inneren Schicht zusätzlich Titanoxid TiO₂ in einem Anteil von 2 Gew.-% bis 8 Gew.-% umfasst.

9. Vorformling nach Anspruch 1, 2 oder 3, **dadurch gekennzeichnet, dass** es eine innere Schicht aus dem gleichen polymeren Material und mit den gleichen Zusatzstoffen wie die äußere Schicht, und eine Zwischenschicht aus einem polymeren Material mit einem Farbstoff mit Lichtabsorptionsvermögen, um für den genannten Behälter, welcher durch den genannten Streckblasformenprozess des Vorformlings erhalten wird, einen Lichtbarriereeffekt durch Absorption bereitzustellen, umfasst.

10. Vorformling nach Anspruch 9, **dadurch gekennzeichnet, dass** das genannte polymere Material der genannten Zwischenschicht aus Polyethylen hoher Dichte (PEHD) und Polypropylen (PP) gewählt wird.

11. Vorformling nach Anspruch 10, **dadurch gekennzeichnet, dass** der genannte Farbstoff mit Lichtabsorptionsvermögen im polymeren Material der Zwischenschicht in einem Anteil von 0,1 Gew.-% bis 8 Gew.-% vorliegt.

12. Vorformling nach Anspruch 11, **dadurch gekennzeichnet, dass** der genannte Farbstoff mit Lichtabsorptionsvermögen des polymeren Materials der Zwischenschicht Ruß ist.

13. Vorformling nach einem der Ansprüche 9 bis 12, **dadurch gekennzeichnet, dass** das polymere Material der Zwischenschicht zusätzlich Titanoxid (TiO₂) in einem Anteil von 2 Gew.-% bis 8 Gew.-% umfasst.

## Revendications

1. Une ébauche pour former des récipients ayant un effet de barrière lumineuse par moulage par étirage-soufflage, comportant une seule couche ou couche extérieure faite de matériel polymérique ayant une proportion d'oxyde de titane TiO₂ égale ou supérieure à 2% du poids pour fournir un effet de barrière lumineuse par réflexion à un récipient obtenu par moulage par étirage-soufflage d'une ébauche, **caractérisée en ce que**:
ce matériel polymérique de cette seule couche ou couche extérieure est sélectionné de polyéthylène à haute densité (PEHD) et polypropylène (PP);
cette proportion d'oxyde de titane TiO₂ dans le matériel polymérique de la seule couche ou couche extérieure est de 2% à 8% du poids; et
le matériel polymérique de la seule couche ou couche extérieure comporte en plus un colorant ayant la capacité d'absorption de rayon infrarouge dans une proportion de 0,0005% à 3% du poids.

2. L'ébauche conformément à la revendication 1, **caractérisée en ce que** le matériel polymérique de la seule couche ou couche extérieure est sélectionné de polyéthylène à haute densité (PEHD) ayant une densité (sans additifs) de 0,94 g/cm³ à 0,97 g/cm³.

3. L'ébauche conformément à la revendication 1 ou 2, **caractérisée en ce que** ce colorant ayant la capacité d'absorption de rayon infrarouge de la seule couche ou couche extérieure est le noir de carbone dans une proportion de 0,0005% à 0,1% du poids.

4. L'ébauche conformément à la revendication 1, 2 ou 3, **caractérisée en ce qu'**elle comporte une couche intérieure faite en matériel polymérique ayant un colorant ayant la capacité d'absorption de la lumière pour fournir un effet de barrière lumineuse par absorption à ce récipient obtenu par la méthode de moulage par étirage-soufflage de l'ébauche.

5. L'ébauche conformément à la revendication 4, **caractérisée en ce que** ce matériel polymérique de cette couche intérieure est sélectionné de polyéthylène à haute densité (PEHD) et de polypropylène (PP).

6. L'ébauche conformément à la revendication 5, **caractérisée en ce que** ce colorant ayant une capacité d'absorption de la lumière est présent dans le matériel polymérique de la couche intérieure dans une proportion de 0,1% à 2% du poids.

7. L'ébauche conformément à la revendication 6, **caractérisée en ce que** le colorant ayant la capacité d'absorption du matériel polymérique de la couche intérieure est le noir de carbone.

8. L'ébauche conformément à une quelconque des revendications 4 à 7, **caractérisée en ce que** le matériel polymérique de la couche intérieure comporte en plus de l'oxyde de titane TiO₂ dans une proportion de 2% à 8% du poids.

9. L'ébauche conformément à la revendication 1, 2 ou 3, **caractérisée en ce qu'**elle comporte une couche intérieure faite en le même matériel polymérique et ayant les mêmes additifs que la couche intérieure et une couche intermédiaire faite en matériel polymérique ayant un colorant ayant la capacité d'absorption de la lumière pour fournir un effet de barrière lumineuse par absorption à ce récipient obtenu par la méthode de moulage par d'étirage-soufflage de l'ébauche.

10. L'ébauche conformément à la revendication 9, **caractérisée en ce que** ce matériel polymérique de cette couche intermédiaire est sélectionné de polyéthylène à haute densité (PEHD) et polypropylène (PP).

11. L'ébauche conformément à la revendication 10, **caractérisée en ce que** ce colorant ayant la capacité d'absorption de la lumière est présent dans le matériel polymérique de la couche intermédiaire dans une proportion de 0,1% à 8% du poids.

12. L'ébauche conformément à la revendication 11, **caractérisée en ce que** ce colorant ayant la capacité d'absorption de la lumière du matériel polymérique de la couche intermédiaire est le noir de carbone.

13. L'ébauche conformément à une quelconque des revendications 9 à 12, **caractérisée en ce que** le matériel polymérique de la couche intermédiaire comporte en plus de l'oxyde de titane (TiO₂) dans une proportion de 2% à 8% du poids.
